# EUROPÄISCHE PATENTSCHRIFT

(11) **EP 2 492 666 B1**
(45) Veröffentlichungstag und Bekanntmachung des Hinweises auf die Patenterteilung: **05.06.2019**
(21) Anmeldenummer: 12156365.4
(22) Anmeldetag: 21.02.2012
(51) Int. Cl.: G01N 21/85, G01N 21/3504, G01N 21/03, G01N 21/15, G01N 21/84

(54) **Vorrichtung und Verfahren zur Bestimmung einer Gaskonzentration in einem strömenden Gasgemisch**
Device and method for determining a gas concentration in a flowing gas mixture
Dispositif et procédé destinés à la détermination d'une concentration de gaz dans un mélange de gaz en écoulement

(30) Priorität: 25.02.2011 DE 102011004744
(43) Veröffentlichungstag der Anmeldung: 29.08.2012
(73) Patentinhaber: Wacker Chemie AG, 81737 München (DE)
(72) Erfinder: Kerschhacker, Markus, 5121 St. Radegund (AT); Huber, Johann, 84489 Burghausen (DE); Niemetz, Dr. Markus, 5121 St. Radegund (AT); Maurer, Dr. Christoph, 5122 Überackern (AT)
(74) Vertreter: Belz, Ferdinand

(56) Entgegenhaltungen:
- GB-A- 2 262 338
- US-A- 4 709 150
- US-A- 5 384 640
- US-A- 6 064 488

## Beschreibung

Die Erfindung betrifft ein Verfahren zur Bestimmung einer Gaskonzentration in einem strömenden, Feststoffe enthaltenden Gasgemisch sowie eine Vorrichtung zur Durchführung eines solchen Verfahrens.

In der chemischen Industrie ist es z.B. zur Prozesskontrolle oftmals nötig, die Konzentration eines Gases in einem Feststoff-Gas-Gemisch zu bestimmen. Dies erfolgt beispielsweise gegen Ende eines Prozesses, um den Anteil eines Gases in einem Feststoffe enthaltenden Produkt- und Eduktgemisch zu bestimmen, bevor das Produkt von den nicht umgesetzten Restedukten oder etwaigen Nebenprodukten getrennt und aus einem Reaktor entfernt wird. Ebenso kann die Bestimmung des Gasanteils während einer Reaktion erfolgen, um beispielsweise den Anteil eines Eduktgases oder den Anteil eines Produktgases im Reaktionsgasgemisch zu bestimmen.

Gasanalysen dieser Art sind auch aus der Feuerungstechnik bekannt, da die Betreiber solcher Anlagen gesetzlich verpflichtet sind, regelmäßig die Einhaltung von Emissionsgrenzwerten nachzuweisen. Bei Messungen der Anteile von CO, NO, NO₂, SO₂ usw. im Rauchgas kommen beispielsweise paramagnetische Sauerstoffmessung und nichtdispersive IR-Spektroskopie zum Einsatz.

Einen Schwerpunkt in der Messtechnik stellt die Bestimmung der Gaskonzentration von Sauerstoff dar. Die Bedeutung des Sauerstoffs liegt insbesondere in der Kontrolle eines Verbrennungsprozesses, einer Überwachung einer Reaktion oder in Sicherheitsaspekten.

Aus der Automobilindustrie ist die exakte Sauerstoffmessung im Abgas mittels der sog. Lambda-Sonde bekannt, um das Kraftstoff-Luft-Gemisch zu steuern. Hier wird genutzt, dass Zirconiumdioxid bei hoher Temperatur Sauerstoffionen elektrolytisch transportieren kann, wodurch eine Spannung entsteht.

Für Sauerstoffmessungen kommen also ZrO2-Sonden in Betracht. Diese Messung basiert darauf, dass in einer Messzelle ein Referenzgas (z.B. Luft) mittels einer Zirkonoxid-Membran, die auf beiden Seiten mit Platin beschichtet ist, vom Probengas getrennt wird. Dadurch bildet sich eine elektrochemische Zelle, die bei einem Unterschied in den Sauerstoffkonzentrationen auf beiden Seiten zu einem Sauerstoffgradienten über die Dicke der Zirkonoxidmembran und zu einer elektrischen Potentialdifferenz zwischen den Platin-Elektroden führt. Aus dem Spannungsabfall lässt sich der Sauerstoffpartialdruck ermitteln.

Bei der Überwachung von Heizkesseln kann eine Lambdasonde den Sauerstoffgehalt des Abgases messen und so am Kessel ein optimales Gemisch regeln, um so einen Überschuss oder Mangel an Verbrennungsluft zu verhindern.

Bei Anwendungen in Gasströmen mit hohem Partikelanteil und eventuellen Stoffen, die eine Querempfindlichkeit verursachen oder eine Alterung der Sonde hervorrufen, sind diese Sonden jedoch zu anfällig und die mit solchen Sonden betriebenen Anlagen sehr wartungsintensiv.

Aus GB 2262338A ist ein Infrarot Gasdetektor bekannt, bei dem die Konzentrationsbestimmung in einem partikelhaltigen Gasstrom mittels Infrarotabsorption in einem porösen Rohr erfolgt.

Eine weitere Möglichkeit zur Sauerstoffmessung stellen Diodenlaserspektrometer dar. Ein Detektor misst die Absorption des Laserlichts durch die Gasmoleküle. Daraus lässt sich die Gaskonzentration berechnen.

Allerdings ist der Einsatz eines Diodenlaserspektrometers immer dann problematisch, wenn ein Prozessgas untersucht werden soll, dass einen vergleichsweise hohen Feststoffanteil aufweist. Die Feststoffe beeinträchtigen die Transmission des Lasers und damit das Messergebnis.

Daher wurden im Stand der Technik Anstrengungen unternommen, die Konzentrationsmessung in mit Feststoff beladenen Gasen zu verbessern.

In CN 100545634C wird dazu der Einsatz von Verdrängerkörpern bzw. Blockiereinrichtungen vorgeschlagen, um die Feststoffteilchen abzulenken bzw. abzublocken. Die Verdrängerkörper weisen beispielsweise die Form von Ablenkblechen auf. Es hat sich jedoch gezeigt, dass bei verdünnten Feststoff-Gasströmen und bestimmten hochfluiden Feststoffen durch Wirbelbildung und Umkehrströme Feststoffe auf und hinter die Ablenkbleche gelangen können und auch hier der Laserstrahl beeinträchtigt wird.

Herkömmliche Laserspektrometer können nur bei Gasgemischen mit einem Partikelanteil bis ca. 50 g/m³ sicher betrieben werden.

In der chemischen Industrie gibt es aber Anwendungen, bei denen der Partikelanteil deutlich höher ist.

Ein Beispiel hierfür ist die Prozesskontrolle bei der Herstellung von hochdisperser Kieselsäure.

Bei der Herstellung von polykristallinem Silicium durch Abscheidung aus Chlorsilanen und Wasserstoff z.B. in einem Siemens-Reaktor fällt Siliciumtetrachlorid (SiCl₄) an.

Die Herstellung von SiO₂-Pulvern (hochdisperse Kieselsäure) über Flammenhydrolyse ist beispielsweise aus DE2620737 und EP790213 bekannt. Neben dem o.g. Siliciumtetrachlorid können auch eine Vielzahl anderer siliciumhaltiger Verbindungen und deren Mischungen, z.B. Methyltrichlorsilan, Trichlorsilan oder deren Mischungen mit Siliciumtetrachlorid als Ausgangsstoffe dienen. Auch chlorfreie Silane oder Siloxane können eingesetzt werden. Nach EP790213 ist auch der Einsatz von dimeren Chlorsilanen und Siloxanen möglich.

Zur Prozesskontrolle bzw. -absicherung sind bei der Produktion von Kieselsäure Sauerstoffmessungen erforderlich.

Bei der Herstellung von Kieselsäure umfasst der Gasstrom üblicherweise einen Partikelanteil von mehr als 50 g/m³, üblicherweise 100-200 g/m³.

Dies bedeutet, dass ohne zusätzliche Vorrichtungen eine Messung von Gaskonzentrationen mittels herkömmlicher optischer Messtechnik, wie zum Beispiel eine Sauerstoff-Messung mittels Lasertechnik, nicht möglich ist.

Die in CN 100545634C vorgeschlagenen Verdrängerkörper führen bei Anwendung in der Herstellung von flammenhydrolytisch erzeugter Kieselsäure zu unsicheren Messergebnissen. Dies hängt zum einen mit der Größe und der Dichte der im Gasstrom enthaltenen Partikel zusammen. Auch die äußerst geringe Massenträgheit der Teilchen hat sich als für die Messung nachteilig erwiesen. Die Lasermessung wird dadurch beeinträchtigt, dass die Verdrängerkörper aufgrund von Wirbelbildung nicht sicherstellen können, dass keine Partikel in die Messstrecke gelangen. Die Transmission des Lasers ist in einem solchen Gasstrom zu niedrig. Speziell bei der Herstellung von Kieselsäure mittels Flammenhydrolyse werden Laser mit zu niedrigem Transmissionswert von der technischen Überwachung nicht als Schutzeinrichtung gegen Bildung von zündfähigen Gasgemischen zugelassen.

Aus dieser Problematik ergab sich die Aufgabenstellung der vorliegenden Erfindung.

Die Aufgabe der Erfindung wird gelöst durch ein Verfahren zur Bestimmung einer Gaskonzentration in einem strömenden Gasgemisch mit einem Partikelanteil von mehr als 50 g/m³, bei der Herstellung von Kieselsäure, wobei das strömende Gasgemisch Feststoffe mit einer bestimmten Größenverteilung umfasst, wobei mittels eines optischen Spektrometers (2) die Konzentration eines Gases im strömenden Gasgemisch gemessen wird, wobei ein Messstrahl des optischen Spektrometers (2) während der Messung durch einen Messkanal (3) mit Wänden (4) aus einem gasdurchlässigen Werkstoff geführt wird, wobei der Messkanal ein Rohr aus gasdurchlässigem PTFE ist, das eine Wandstärke von 5 bis 7 mm, einen Durchmesser von 55 mm und eine mittlere Porengröße von 5 µm besitzt, wobei die Gasdurchlässigkeit im Bereich von 0,036 m/(s*bar) - 0,073m /(s*bar) liegt und es sich beim optischen Spektrometer (2) um ein Laserspektrometer handelt und das strömende Gasgemisch flammenhydrolysierte Kieselsäure-Partikel, HCl, Cl₂ und O₂ umfasst, die Konzentration von O₂ oder HCl im Gasgemisch bestimmt wird.

Ein weiterer Gegenstand der Erfindung ist eine Vorrichtung zur Bestimmung einer Gaskonzentration eines Feststoffe enthaltenden Gasgemisches mit einem Partikelanteil von mehr als 50 g/m³, bei der Herstellung von Kieselsäure, wobei das strömende Gasgemisch Feststoffe mit einer bestimmten Größenverteilung umfasst und das strömende Gasgemisch flammenhydrolysierte Kieselsäure-Partikel, HCl, Cl₂ und O₂ umfasst und die Konzentration von O₂ oder HCl im Gasgemisch bestimmt wird, in einer industriellen Anlage, umfassend eine Gasleitung (1), geeignet zur Führung des Feststoffe enthaltenden Gasgemisches, ein optisches Spektrometer (2), innerhalb der Gasleitung (1) einen Messkanal (3) umfassend einen Messstrahl des optischen Spektrometers (2), wobei der Messkanal von Wänden (4) aus einem gasdurchlässigen Werkstoff umgeben ist und wobei die Wände (4) aus PTFE bestehen und eine Wandstärke von 5 bis 7 mm, einen Durchmesser von 55 mm und eine mittlere Porengröße von 5 µm besitzen, wobei die Gasdurchlässigkeit im Bereich von 0,036 m/(s*bar) - 0,073m /(s*bar) liegt und es sich beim optischen Spektrometer (2) um ein Laserspektrometer handelt.

Bei der industriellen Anlage handelt es sich vorzugsweise um einen Reaktor. Dieser Reaktor umfasst vorzugsweise eine Zufuhrvorrichtung für Reaktionsgase, einen Reaktionsraum und eine Auslassvorrichtung für Produktgase.

Der Messkanal kann sich innerhalb und außerhalb des Reaktors befinden.

Der Werkstoff der Umwandungen des Messkanals bzw. des Hohlzylinders ist derart beschaffen, dass er optimal auf die Partikel-Gas-Bedingungen abgestimmt ist.

Vorzugsweise wird der Messkanal durch einen zylindrischen Körper gebildet. Zylindrisch im Sinne der Erfindung soll bedeuten, dass der Körper eine Mantelfläche und einen Querschnitt umfasst, wobei der Querschnitt beispielsweise kreisförmig oder rechteckig sein kann.

Der Messkanal kann beispielsweise durch die Form eines Rohres gegeben sein.

Der zylinderförmige Körper, der den Messkanal bildet, wird vorzugsweise in einem Weg des Prozessgases vorgesehen, den dieses z.B. in einem Reaktor oder in einer (Produktions-)Anlage nimmt.

Vorzugsweise wird der zylinderförmige Körper auf einer Halterung montiert, die ein leichtes Entfernen des Körpers zu Wartungszwecken ermöglicht.

Die Länge des Messkanals (optische Pfadlänge) ist variabel wählbar, sie liegt vorzugsweise zwischen 200 mm bis einige Meter.

Der Querschnitt des Messkanals ist vorzugsweise an das optische System angepasst. Der Messstrahl des optischen Spektrometers weist eine gewisse Ausdehnung auf. Der Querschnitt des Messkanals soll entsprechend größer gewählt werden. Vorzugsweise ist ein Innendurchmesser des Messkanals wenigstens 10% größer als ein Durchmesser des Messstrahls. Der Innendurchmesser des Messkanals kann beispielsweise 3-100 mm, vorzugsweise 10-90 mm, besonders bevorzugt 20-80 mm, ganz besonders bevorzugt 30-70 mm betragen.

Die Wände des Messkanals sollten eine solche Dicke aufweisen, dass sie den durch das strömende Prozessgas verursachten Kräften standhalten können.

Vorzugsweise beträgt die Wanddicke 1 bis 20 mm, besonders bevorzugt 4 bis 10 mm.

Die Gasdurchlässigkeit der Wände des Messkanals beträgt vorzugsweise 0,01 m/(s*bar) - 0,1 m/(s*bar).

Vorzugsweise handelt es sich beim gasdurchlässigen Werkstoff um einen porösen Werkstoff, dessen Porengröße abhängig von der Größenverteilung der Partikel oder Feststoffe im Gasgemisch gewählt wird.

Falls die Partikel beispielsweise eine Größenverteilung von 5 bis 20 µm aufweisen, sollte die mittlere Porengröße des Werkstoffs idealer weise kleiner oder gleich 5 µm betragen.

Als gasdurchlässiger Werkstoff kommt vorzugsweise ein Polymer zum Einsatz.

Besonders bevorzugt ist die Verwendung von Polytetrafluorethen (PTFE). Vorzugsweise beträgt die Gasdurchlässigkeit des Messkanals aus PTFE vorzugsweise 0,03 m/(s*bar) - 0,08 m/(s*bar), ganz besonders bevorzugt 0,04 m/(s*bar) - 0,07 m/(s*bar).

Ganz besonders bevorzugt ist die Verwendung von gesintertem PTFE.

Ebenso eignen sich auch gasdurchlässige Sinter-Keramiken oder Sinter-Metalle. Deren Verwendung ist besonders bevorzugt, wenn die Messungen an Gasgemischen mit Temperaturen von größer oder gleich 200°C erfolgen.

Vorzugsweise beträgt die Temperatur des Gasgemisches während der Messung von 0 bis 1500°C. Besonders bevorzugt beträgt die Temperatur des Gasgemisches 120 bis 1000 °C.

Durch den Einsatz eines solchen Messkanals wird der Feststoff im Gasgemisch vom Laserstrahl ferngehalten. Gas kann die Wände durchdringen, die Feststoffteilchen werden abgehalten. Je nach gewählter Porengröße bzw. Gasdurchlässigkeit können kleine Partikel die Wände des Messkanals teilweise durchdringen, stören jedoch die Messung nicht.

Gleichzeitig wird sichergestellt, dass der Feststoff im Gasgemisch den Messkanal nicht blockieren kann.

Überraschenderweise kommt zu keinerlei Ablagerungen an den Außenwänden des Messkanals.

Die im Stand der Technik beobachteten Verwirbelungen, die zu einer Erhöhung der Partikeldichte beitrugen, treten beim erfindungsgemäßen Verfahren nicht auf.

Wenn die Partikel im Gasstrom vergleichsweise leicht sind, also damit eine geringe Massenträgheit aufweisen, zeigen sich die besonderen Vorzüge des Verfahrens im Vergleich zu den Verdrängerkörpern oder Ablenkblechen des Stands der Technik. Die Ablenkbleche können nämlich nur ihren Zweck erfüllen, wenn die Teilchen schwer genug sind, um der Ablenkung und nicht dem strömenden Gas zu folgen. Dies ist jedoch bei einer Vielzahl von Anwendungen nicht immer der Fall.

Durch die exaktere Messung der Gaskonzentration ergibt sich auch ein verbessertes (schnelleres) Ansprechverhalten auf Prozessänderungen, wenn die Messung der Kontrolle eines Produktionsprozesses dient, was bevorzugt ist.

Ganz besonders bevorzugt ist die Bestimmung der Sauerstoffkonzentration in einem Prozessgas.

Beim Feststoff im Gasgemisch handelt es sich dabei um flockige Aggregate von Primärteilchen bzw. Agglomerate von Aggregaten, wobei die Agglomerate eine Größe von 1 bis 250 µm aufweisen. In diesem Fall dient die Messung der Anlagensicherheit und Prozesssteuerung. Dabei hat das neue Messverfahren hier besondere Vorteile, zumal die wartungsintensiven Zirkonoxidsonden ersetzt werden können. Die Erfinder haben erkannt, dass die Zirkonoxidsonden insbesondere bei Anwesenheit von HCl, was bei der Flammenhydrolyse von Kieselsäure der Fall ist, verfälschte Messwerte liefern. Die Messung unter Verwendung eines Messkanals mit Wänden aus einem gasdurchlässigen Werkstoff zeigt diesbezüglich keinerlei Probleme.

Damit stellt das erfindungsgemäße Verfahren eine kostengünstigere und verlässlichere Messung der Sauerstoffkonzentration in Gasströmen bei der Produktion von Kieselsäure dar.

Andere Maßnahmen wie etwa eine Verkürzung des Messkanals bzw. der Messstrecke haben sich als nicht geeignet erwiesen.

Bei einer Verkürzung der Messtrecke, um auf diese Art die Zahl der Partikel zu verringern, liegt die Messgenauigkeit aufgrund der kürzeren optischen Länge nur bei etwa 0,25 Vol-%, was bei der Messung geringer Gaskonzentrationen nicht akzeptabel ist.

Bezüglich der im Stand der Technik beschriebenen Verdrängerkörper hat sich als weiterer schwerwiegender Nachteil erwiesen, dass sich die Druckverluste im Prozessgaskanal deutlich erhöhen. Dies hängt mit der Querschnittverengung sowie Umströmungen der Verdrängerkörper zusammen. Im erfindungsgemäßen Verfahren treten solche Druckverluste in deutlich geringerem Umfang auf.

Auch Versuche mit einem Staurohr aus Stahl, um vor der Messung partikelfreies Gas abzuführen, waren nicht erfolgreich, da zum einen neben dem Auftreten von Korrosionsproblemen auch Kieselsäurepartikel mitgeführt wurden. Zum anderen konnte für die Durchströmung des Staurohres nicht ausreichend Differenzdruck zur Verfügung gestellt werden, was enorme Totzeiten verursachte, was wiederum den Sicherheitsanforderungen widersprach.

Experimente mit Filterschläuchen aus PTFE-Nadelfilz, wie sie in der Feststoffabscheidung Verwendung finden, waren bei Gasmessungen im Rahmen der Flammenhydrolyse von Kieselsäure ebenfalls ohne Erfolg. Durch die hohe Strömungsgeschwindigkeit wurden Kieselsäurepartikel in den Filter-Schlauch gepresst, die den Durchgang des optischen Messstrahls blockierten. Weiterhin war am Filterschlauch - auf Grund der hohen Strömungsgeschwindigkeiten im Prozess - mechanischer Abrieb zu beobachten, der zu Undichtigkeiten des Filters führen kann.

### Beispiel

Der zylindrische Messkanal wird durch ein Rohr aus gasdurchlässigem PTFE gebildet. Das Rohr weist eine Länge von ca. 200 mm auf. Die Wandstärke beträgt ca. 5 bis 7 mm. Der Durchmesser des Rohrs beträgt etwa 55 mm. Die mittlere Porengröße beträgt 5 µm. Die Gasdurchlässigkeit solcher PTFE-Rohre liegt im Bereich von 0,036 m/(s*bar) - 0,073m/(s*bar.)

Die Gasdurchlässigkeit eines PTFE-Rohrs wird idealerweise wie folgt bestimmt:
Das Rohr wird an den beiden Enden z.B. mit Gummistopfen verschlossen, wobei einer der Stopfen eine Öffnung für Druckmessung und der andere Stopfen eine Öffnung zur Einleitung von Luft aufweist. Die Entnahme aus einer Druckleitung wird reduziert auf 1,7 bar (bei einer zweiten Vergleichsmessung auf 1 bar). Mittels eines regelbaren Durchflussmessers wird der Durchfluss eingestellt. Anschließend wird der Druck im PTFE-Rohr mit einem Relativdrucktransmitter gemessen. Somit lässt sich der Differenzdruck über das Rohr ermitteln und schließlich die Gasdurchlässigkeit berechnen.

Ein solches PTFE-Rohr wird im Beispiel zur Messung der Sauerstoffkonzentration in einem Kieselsäure enthaltenden Gasgemisch verwendet. Als Messgerät kommt ein handelsübliches Laserspektrometer zur Messung von Gaskonzentrationen in Feststoff enthaltenden Gasgemischen zum Einsatz. Die Temperatur des strömenden Gasgemisches, an dem die Sauerstoffkonzentration gemessen wird, beträgt 167 °C.

Als Prüfgas wird ein Sauerstoff-Stickstoff-Gasgemisch mit 4,5 Vol% Sauerstoff, dem Kieselsäure mit 80 g/m³ zugespeist wird.

Als **Vergleichsbeispiel** wird statt dem Filterrohr ein Ablenkblech verwendet wie im Stand der Technik, vgl. CN 100545634C, beschrieben.

**Tabelle 1** zeigt die Ergebnisse für Beispiel und Vergleichsbeispiel.

**Tabelle 1**

| | Startwerte | | nach 2 min | | nach 5 min | | nach 10 min | |
|---|---|---|---|---|---|---|---|---|
| Testaufbau | MW | Tr. | MW | Tr. | MW | Tr. | MW | Tr. |
| | | | | | | | | |
| **Vergleichs beispiel** | 4,50 Vol% | 95% | 4,47 Vol% | 25% | 3,11 Vol% | 3% | keine Messung | 1% |
| | | | | | | | | |
| **Beispiel** | 4,51 Vol% | 94% | 4,50 Vol% | 80% | 4,51 Vol% | 79% | 4,49 Vol% | 79% |

| | | | | | | | | |
|---|---|---|---|---|---|---|---|---|
| MW bezeichnet in der Tabelle den gemessenen Sauerstoffwert in Vol%, Tr. die gemessene Transmission des Laserstrahls in %. | | | | | | | | |

Es zeigt sich, dass nur durch die Verwendung eines Filterrohres, das einem erfindungsgemäßen Messkanal mit Wänden aus einem gasdurchlässigen Werkstoff entspricht, dauerhaft eine ausreichende Transmission im Bereich von 80% erreicht wird. Bei Verwendung eines Ablenkblechs sinkt die Transmission bereits nach 2 min auf 25%. Nach 10 min ist die Transmission bereits so niedrig, dass keine Sauerstoffmessung mehr möglich ist.

Eine Vorrichtung zur Erzeugung von Kieselsäure umfasst vorzugsweise eine Reaktorkammer 1 bis 40 m.

Bevorzugt hat die Reaktorkammer einen kreisförmigen Querschnitt. Der Reaktor umfasst eine Reaktionsdüse mit einen vorzugsweise kreisförmigen Querschnitt auf.

Bei den Reaktionsgasen handelt es sich vorzugsweise um Sauerstoff, also beispielsweise um Luft, ein Brenngas wie zum Beispiel Wasserstoff und eine Siliciumverbindung.

Beispiele für die Siliciumverbindung sind Siliciumtetrachlorid, Trichlorsilan, Methylsiliciumtrichlorid und deren Mischungen.

Vorzugsweise wird der Sauerstoff für den Einsatz im Reaktor aus der Luft aus der umgebenden Atmosphäre entnommen. Der Sauerstoff O₂ in der Luft kann angereichert sein auf größer 21 Vol-%, zum Beispiel durch Zusatz von reinem Sauerstoff O₂ oder durch Zusatz von Luft, die größer 21 Vol.% Sauerstoff O₂ enthält.

Vorzugsweise können über eine weitere Düse, die die Reaktordüse, aus der die Reaktionsgase austreten, ringförmig umschließt, zusätzlich reiner Sauerstoff oder Luft oder Luft-Sauerstoffgemische oder zusätzlich reiner Stickstoff oder Luft oder Luft-Stickstoffgemische oder Wasserstoff oder Wasserstoff-Stickstoff-Gemisch zugeführt werden.

Vorzugsweise wird der bei der Reaktion gebildete Chlorwasserstoff durch Absorption und eventuell Desorption zurückgewonnen, gereinigt und getrocknet. Das erfindungsgemäße Verfahren wird vorzugsweise auch zur Bestimmung der Konzentration von Chlorwasserstoff in den Prozessgasen eingesetzt.

Der so erhaltene trockene Chlorwasserstoff wird vorzugsweise zur Herstellung von Chlorsilanen wie Trichlorsilan, Dichlorsilan und Monosilan aus metallurgischem Silicium verwendet.

Vorzugsweise wird eine Nachverbrennung von restlichem Sauerstoff und Chlorgas durchgeführt, indem an zumindest einem anderen Ort als der Reaktordüse in der Reaktorkammer ein Brenngas in die Flamme zugegeben wird.

Vorzugsweise können an verschiedenen Orten in der Reaktionskammer, weiteres Brenngas, wie zum Beispiel Wasserstoff oder Erdgas, in die Reaktionszone zugegeben werden. Bevorzugt wird dieses zusätzliche Brenngas dazu eingesetzt, um in dem Reaktor gebildetes Chlorgas zu HCl zu reduzieren.

Vorzugsweise wird nur Wasserstoff als Brenngas eingesetzt. Vorzugsweise wird so die Bildung von Kohlenstoffoxiden, wie Kohlenmonoxid CO und die Bildung von chlorierten aromatischen Kohlenwasserstoffen, wie zum Beispiel chlorierte Dibenzodioxine, unterdrückt.

Auch die Konzentration an Kohlenstoffoxiden wie Kohlenmonoxid wird vorzugsweise mittels des erfindungsgemäßen Verfahrens bestimmt.

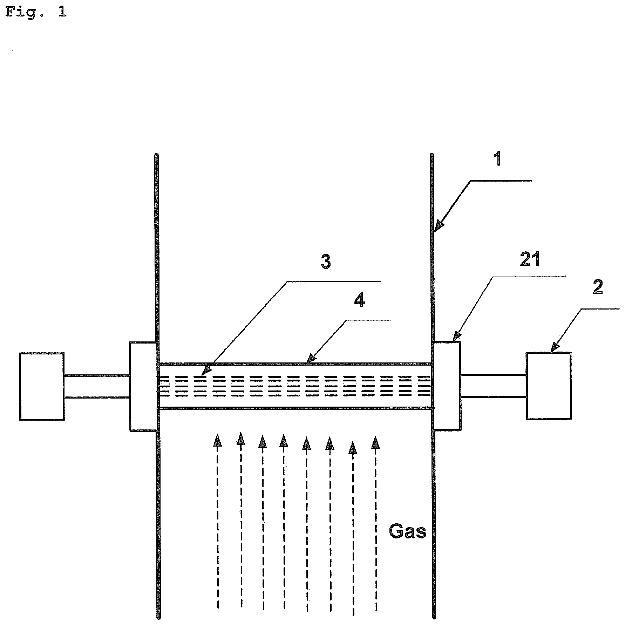

Im Folgenden wird die Erfindung anhand von **Fig. 1** erläutert.

**Fig. 1** zeigt schematisch die erfindungsgemäße Vorrichtung.

**1** zeigt ein Rohr, in dem ein Gasgemisch transportiert wird. **3** stellt einen Messkanal dar, in dem die Konzentration eines Gases im Gasgemisch bestimmt wird.
Messkanal **3** befindet sich innerhalb des Filterrohres **4,** das Wände aus einem gasdurchlässigen, porösen Werkstoff aufweist. Die Messung der Gaskonzentration erfolgt mittels eines optischen Spektrometers **2,** das über Spektrometeraufnahme **21** mit Messkanal **3** verbunden ist.

## Patentansprüche

1. Verfahren zur Bestimmung einer Gaskonzentration in einem strömenden Gasgemisch mit einem Partikelanteil von mehr als 50 g/m³, bei der Herstellung von Kieselsäure, wobei das strömende Gasgemisch Feststoffe mit einer bestimmten Größenverteilung umfasst, wobei mittels eines optischen Spektrometers (2) die Konzentration eines Gases im strömenden Gasgemisch gemessen wird, wobei ein Messstrahl des optischen Spektrometers (2) während der Messung durch einen Messkanal (3) mit Wänden (4) aus einem gasdurchlässigen Werkstoff geführt wird, wobei der Messkanal ein Rohr aus gasdurchlässigem PTFE ist, das eine Wandstärke von 5 bis 7 mm, einen Durchmesser von 55 mm und eine mittlere Porengröße von 5 µm besitzt, wobei die Gasdurchlässigkeit im Bereich von 0,036 m/(s*bar) - 0,073m /(s*bar) liegt und es sich beim optischen Spektrometer (2) um ein Laserspektrometer handelt und das strömende Gasgemisch flammenhydrolysierte Kieselsäure-Partikel, HCl, Cl₂ und O₂ umfasst, die Konzentration von O₂ oder HCl im Gasgemisch bestimmt wird.

2. Vorrichtung zur Bestimmung einer Gaskonzentration eines Feststoffe enthaltenden Gasgemisches mit einem Partikelanteil von mehr als 50 g/m³, bei der Herstellung von Kieselsäure, wobei das strömende Gasgemisch Feststoffe mit einer bestimmten Größenverteilung umfasst und das strömende Gasgemisch flammenhydrolysierte Kieselsäure-Partikel, HCl, Cl₂ und O₂ umfasst und die Konzentration von O₂ oder HCl im Gasgemisch bestimmt wird, in einer industriellen Anlage, umfassend eine Gasleitung (1), geeignet zur Führung eines Feststoffe enthaltenden Gasgemisches, ein optisches Spektrometer (2), innerhalb der Gasleitung (1) einen Messkanal (3) umfassend einen Messstrahl des optischen Spektrometers (2), wobei der Messkanal von Wänden (4) aus einem gasdurchlässigen Werkstoff umgeben ist und wobei die Wände (4) aus PTFE bestehen und eine Wandstärke von 5 bis 7 mm, einen Durchmesser von 55 mm und eine mittlere Porengröße von 5 µm besitzen, wobei die Gasdurchlässigkeit im Bereich von 0,036 m/(s*bar) - 0,073m /(s*bar) liegt und es sich beim optischen Spektrometer (2) um ein Laserspektrometer handelt.

## Claims

1. Method for determining a gas concentration in a flowing gas mixture having a particle content of more than 50 g/m³ in the production of silica, wherein the flowing gas mixture comprises solids having a defined size distribution, wherein by way of an optical spectrometer (2) the concentration of a gas is measured in the flowing gas mixture, wherein a measurement beam of the optical spectrometer (2) is conducted during the measurement through a measurement channel (3) having walls (4) made of a gas-permeable material, wherein the measurement channel is a tube of gas-permeable PTFE having a wall thickness of 5 to 7 mm, a diameter of 55 mm and an average pore size of 5 µm, where the gas permeability is in the range of 0.036 m/(s*bar)-0.073 m/(s*bar) and the optical spectrometer (2) is a laser spectrometer and the flowing gas mixture comprises flame-hydrolyzed silica particles, HCl, Cl₂ and O₂, and the concentration of O₂ or HCl is determined in the gas mixture.

2. Device for determining a gas concentration of a solids-containing gas mixture having a particle content of more than 50 g/m³ in the production of silica, wherein the flowing gas mixture comprises solids having a defined size distribution and the flowing gas mixture comprises flame-hydrolyzed silica particles, HCl, Cl₂ and O₂, and the concentration of O₂ or HCl is determined in the gas mixture in an industrial plant, which device comprises a gas line (1), suitable for conducting a solids-containing gas mixture, an optical spectrometer (2), within the gas line (1) a measurement channel (3) comprising a measurement beam of the optical spectrometer (2), wherein the measurement channel is surrounded by walls (4) made of a gas-permeable material and wherein the walls (4) consist of PTFE and have a wall thickness of 5 to 7 mm, a diameter of 55 mm and an average pore size of 5 µm, where the gas permeability is in the range of 0.036 m/(s*bar)-0.073 m/(s*bar) and the optical spectrometer (2) is a laser spectrometer.

## Revendications

1. Procédé de détermination de la concentration d'un gaz dans un mélange gazeux en écoulement ayant une proportion de particules de plus de 50 g/m³, lors de la fabrication de silice, le mélange gazeux en écoulement comprenant des solides ayant une distribution de taille déterminée, la concentration d'un gaz dans le mélange gazeux en écoulement étant mesurée au moyen d'un spectromètre optique (2), un faisceau de mesure du spectromètre optique (2) étant acheminé pendant la mesure au travers d'un canal de mesure (3) comprenant des parois (4) en un matériau perméable aux gaz, le canal de mesure étant un tube en PTFE perméable aux gaz, qui présente une épaisseur de paroi de 5 à 7 mm, un diamètre de 55 mm et une taille de pores moyenne de 5 µm, la perméabilité aux gaz se situant dans la plage allant de 0,036 m/(s*bar) à 0,073 m/(s*bar), et le spectromètre optique (2) étant un spectromètre laser, et le mélange gazeux en écoulement comprenant des particules de silice hydrolysées à la flamme, HCl, Cl₂ et O₂, la concentration en O₂ ou HCl dans le mélange gazeux étant déterminée.

2. Dispositif pour la détermination de la concentration d'un gaz dans un mélange gazeux contenant des solides ayant une proportion de particules de plus de 50 g/m³, lors de la fabrication de silice, le mélange gazeux en écoulement comprenant des solides ayant une distribution de taille déterminée, et le mélange gazeux en écoulement comprenant des particules de silice hydrolysées à la flamme, HCl, Cl₂ et O₂, la concentration en O₂ ou HCl dans le mélange gazeux étant déterminée, dans une unité industrielle, comprenant une conduite de gaz (1), appropriée pour l'acheminement d'un mélange gazeux contenant des solides, un spectromètre optique (2), à l'intérieur de la conduite de gaz (1) un canal de mesure (3) comprenant un faisceau de mesure du spectromètre optique (2), le canal de mesure étant entouré par des parois (4) en un matériau perméable aux gaz et les parois (4) étant constituées par du PTFE et présentant une épaisseur de paroi de 5 à 7 mm, un diamètre de 55 mm et une taille de pores moyenne de 5 µm, la perméabilité aux gaz se situant dans la plage allant de 0,036 m/(s*bar) à 0,073 m/(s*bar), et le spectromètre optique (2) étant un spectromètre laser.
